# DEMANDE DE BREVET EUROPEEN

(11) **EP 1 174 986 A1**
(43) Date de publication de la demande: **23.01.2002**
(21) Numéro de dépôt: 01401910.3
(22) Date de dépôt: 17.07.2001
(51) Int. Cl.: H02K 7/104

(54) **Rotor feuilleté pour frein à courants de Foucault et dispositif comportant un tel rotor**

(30) Priorité: 20.07.2000 FR 0009514
(71) Demandeur: Société d'Applications Entropologiques Moteurs, 78190 Trappes (FR)
(72) Inventeur: Drecq, Daniel, 78610 Saint Leger en Yvelines (FR); Lesobre, Antoine, 92100 Boulogne (FR)
(74) Mandataire: Abello, Michel

(57) **Abrégé**

Ce rotor feuilleté pour dispositif de freinage à courants de Foucault comporte un empilement (1) d'éléments plans (2) parallèles entre eux en matériau ferromagnétique, ledit empilement étant délimité dans la direction perpendiculaire auxdits éléments plans (2) par deux surfaces opposées (5), ainsi qu'au moins un logement à travers l'épaisseur dudit empilement pour recevoir un organe ferromagnétique (8), en matériau ferromagnétique massif ou feuilleté dans une autre direction que ledit empilement (1), apte à établir un pont magnétique s'étendant entre lesdites deux surfaces opposées (5) et/ou à retenir lesdits éléments plans assemblés.

## Description

La présente invention concerne un rotor feuilleté pour un dispositif de freinage à courants de Foucault ou un dispositif ayant une fonction de frein à courants de Foucault et une fonction de moteur à réluctance variable.

On rappelle qu'un dispositif de freinage à courants de Foucault comporte un rotor ferromagnétique qui est plongé dans un champ magnétique parallèle à son axe de rotation. la structure dentée du rotor crée une variation d'induction magnétique. Cette variation induit des courants dans les parties ferromagnétiques du stator en vis à vis du rotor, et la puissance du dispositif de freinage est égale à la puissance dissipée par effet Joule. L'efficacité du freinage dépend donc de la valeur de la variation d'induction qui dépend elle-même des propriétés ferromagnétiques du matériau dans lequel est réalisé le rotor. Un rotor en matériau ferromagnétique massif permet d'obtenir une très bonne efficacité. Un tel rotor massif, obtenu par moulage ou usinage dans la masse, est nettement plus coûteux qu'un rotor réalisé en matériau ferromagnétique feuilleté. Cependant, un rotor feuilleté est moins efficace pour le freinage par courants de Foucault, et la force magnétique de freinage exerce des efforts qui écartent les éléments de sa structure feuilletée et le détériorent.

Pour compenser cette perte d'efficacité lorsqu'un rotor feuilleté est utilisé, il est possible d'augmenter l'amplitude du champ magnétique d'induction en augmentant l'intensité d'alimentation des inductances du dispositif. Mais une telle augmentation de l'intensité, outre son coût, présente l'inconvénient d'accroître les efforts qui écartent la structure feuilletée et d'accélérer la détérioration du rotor. Il serait donc intéressant de trouver un moyen de rendre la structure d'un rotor feuilleté résistante à ces efforts, afin de pouvoir la soumettre à des champs plus intenses. La présente invention a pour objet de fournir un tel rotor feuilleté résistant à la force magnétique de freinage pour un dispositif de freinage à courants de Foucault avec, de plus, une efficacité de freinage améliorée.

Par ailleurs, outre leur coût réduit, les rotors feuilletés présentent un grand intérêt dans les moteurs à réluctance variable. En effet, dans un moteur à réluctance variable, un rotor denté en matériau ferromagnétique est plongé dans un champ magnétique radial dont la direction est angulairement variable. La présence d'un champ magnétique variable induit aussi des courants de Foucault dans le rotor d'un tel dispositif. Cependant, dans le cas du moteur à réluctance variable, la présence de courants de Foucault est un phénomène parasite qui diminue l'efficacité du moteur et provoque un échauffement du rotor ; il faut donc le minimiser autant que possible. En effet, ces pertes par courants de Foucault sont néfastes à la fois pour le rendement du moteur et pour ses performances, et dégradent le rotor par les échauffements générés localement.

Dans ce but, l'utilisation d'un rotor feuilleté, et plus particulièrement d'un rotor feuilleté comportant un empilement d'éléments de tôle ferromagnétique recouverts d'une couche d'isolant électrique, permet de réduire la puissance dissipée par les courants de Foucault et présente une efficacité améliorée de plus de 100% environ par rapport à un rotor ferromagnétique massif. Cette amélioration de l'efficacité du rotor feuilleté est due à une augmentation des forces électromagnétiques et à une diminution des pertes, toutes deux consécutives à l'accroissement de la résistivité moyenne du rotor par rapport au matériau massif.

En résumé, un rotor massif constitue la meilleure solution pour les freins à courants de Foucault, et un rotor feuilleté la meilleure solution pour le moteurs à réluctance variable. Ainsi, lorsque l'on souhaite combiner dans un seul rotor les fonctions de frein à courants de Foucault et de moteur à réluctance variable, un compromis doit être trouvé pour limiter les pertes générés par les courants de Foucault lors de l'utilisation du rotor pour la fonction motrice, et au contraire optimiser le flux magnétique qui traverse le rotor (dans la direction de l'axe de rotation) lors de l'utilisation de la fonction de freinage. Un rotor feuilleté favorise le passage des flux magnétiques radiaux mais gêne la circulation des flux magnétiques axiaux utilisés dans le mode de freinage. Le flux magnétique axial doit alors traverser autant de petits entrefers qu'il y a d'espaces entre les tôles. D'autre part, l'utilisation d'un matériau feuilleté réduit appréciablement le coût du rotor. L'objet de l'invention est aussi de fournir un rotor feuilleté de moteur à réluctance variable apte à être utilisé en tant que moyen de freinage par courants de Foucault et dont l'efficacité soit améliorée par rapport à un simple rotor feuilleté, ainsi qu'un dispositif ayant une fonction de frein à courants de Foucault et une fonction de moteur à réluctance variable comportant un tel rotor.

Pour cela la présente invention fournit un rotor feuilleté pour dispositif de freinage à courants de Foucault comportant un empilement d'éléments plans parallèles entre eux en matériau ferromagnétique, ledit empilement étant délimité dans la direction perpendiculaire auxdits éléments plans par deux surfaces opposées, caractérisé par le fait qu'il comporte au moins un logement à travers l'épaisseur dudit empilement pour recevoir un organe ferromagnétique, en matériau ferromagnétique massif ou feuilleté dans une autre direction que ledit empilement, apte à établir un pont magnétique s'étendant entre lesdites deux surfaces opposées et/ou à retenir lesdits éléments plans assemblés.

Avantageusement, chaque organe ferromagnétique comporte deux extrémités liées respectivement à chacune desdites deux surfaces opposées, de manière à maintenir lesdits éléments plans en contact les uns contre les autres.

De préférence dans ce cas, chaque organe ferromagnétique est électriquement isolé dudit empilement, sauf éventuellement au voisinage desdites deux extrémités liées.

De préférence, chaque organe ferromagnétique comporte une goupille, de forme quelconque, s'étendant à travers lesdits éléments plans sensiblement perpendiculairement à ceux-ci.

Avantageusement, chaque goupille est soudée à ses extrémités auxdites deux surfaces opposées.

Selon une caractéristique particulière de l'invention, ledit empilement comprend une partie centrale cylindrique dans laquelle est percé un trou d'axe, sensiblement perpendiculairement auxdits éléments plans, pour permettre le montage dudit rotor sur un axe de rotation.

Avantageusement, la partie centrale dudit empilement comporte plusieurs goupilles agencées sur un ou plusieurs cercle(s) centré(s) en ledit axe de rotation.

Dans un mode de réalisation particulier, le rotor selon l'invention est aussi apte à servir de rotor d'un moteur à réluctance variable, ledit empilement comprenant une pluralité de dents découpées dans lesdits éléments plans et s'étendant sensiblement radialement par rapport audit axe de rotation depuis une partie centrale sensiblement cylindrique.

De préférence, dans ce cas, la plupart des dents comportent chacune au moins une desdites goupilles.

Avantageusement, chaque dent comporte plusieurs desdites goupilles radialement espacées les unes des autres.

Avantageusement, chaque goupille est agencée sur un axe radial médian de la dent associée.

Selon une autre caractéristique de l'invention, au moins un premier sous-ensemble dudit empilement comporte lesdites dents découpées sur une première distance radiale prédéterminée à partir de la périphérie des éléments plans, et au moins un second sous-ensemble dudit empilement comporte lesdites dents découpées sur une seconde distance radiale prédéterminée supérieure à ladite première distance radiale, de façon que ledit premier sous-ensemble définisse une pluralité de voiles entre les dents du second sous-ensemble.

Avantageusement, ledit premier sous-ensemble est au milieu de l'empilement et comporte de part et d'autre de son plan médian un sous-ensemble du type du second sous-ensemble précité.

De préférence, chaque élément plan est recouvert sur ses deux faces planes opposées d'une couche d'isolant électrique.

L'invention fournit également un dispositif de freinage à courants de Foucault caractérisé par le fait qu'il comprend un rotor feuilleté ayant une ou plusieurs des caractéristiques décrites ci-dessus, solidaire d'un arbre monté tournant à travers un carter contenant au moins un bobinage d'induction porté par une zone périphérique interne dudit carter, pour engendrer un champ magnétique à travers ledit rotor, ledit champ étant apte à engendrer des courants de Foucault afin de freiner la rotation de l'arbre.

Avantageusement, le dispositif de freinage comporte, en outre, une pluralité de bobinages d'induction d'axes sensiblement radiaux et espacés angulairement sur la périphérie interne du carter, lesdits bobinages radiaux étant aptes à être alimentés séquentiellement afin d'entraîner en rotation les dents du rotor sous l'action d'un champ magnétique sensiblement radial de direction angulaire variable, pour que le dispositif puisse servir aussi de moteur à réluctance variable.

De préférence, le carter comporte des échangeurs de chaleur axialement espacés des surfaces opposées du rotor d'un entrefer, de façon que lesdits organes ferromagnétiques servant de ponts magnétiques soient positionnés en vis à vis desdits échangeurs de chaleur.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence au dessin annexé. Sur ce dessin :
- la figure 1 est une vue en perspective du rotor selon l'invention dans un premier mode de réalisation ;
- la figure 2 est une vue en perspective du rotor selon l'invention dans un second mode de réalisation ;
- la figure 3 est une vue en coupe d'une dent du rotor selon l'invention suivant la ligne III-III de la figure 2 ;
- la figure 4 est une représentation graphique du couple de freinage d'un frein à courants de Foucault en fonction de la vitesse de rotation du rotor, pour des rotors réalisés en différents matériaux et pour différentes valeurs de l'intensité dans les bobinages d'induction ;
- la figure 5 est une représentation graphique du couple et de la puissance de freinage d'un frein à courants de Foucault en fonction de la vitesse de rotation du rotor, pour des rotors réalisés en différents matériaux ;
- la figure 6 est un représentation graphique analogue à celle de la figure 5 pour un dispositif de puissance plus élevée ;
- la figure 7 est une vue en perspective d'un troisième mode de réalisation du rotor selon l'invention ;
- la figure 8 est une vue en coupe d'un dispositif ayant une fonction de freinage par courants de Foucault et une fonction de moteur à réluctance variable.

L'invention a pour objet un rotor feuilleté destiné à être monté sur un axe de rotation d'un dispositif de freinage à courants de Foucault ou d'un dispositif ayant une fonction de freinage par courants de Foucault et une fonction de moteur à réluctance variable. Le fonctionnement de tels dispositifs est décrit dans la demande de brevet français n° 9905452. Une machine frein à courants de Foucault comporte typiquement un rotor ferromagnétique monté en rotation sur un axe dans un carter portant un bobinage d'induction coaxial au rotor afin de produire un champ magnétique. Le carter porte aussi en vis à vis du rotor des échangeurs de chaleur pour évacuer la chaleur générée sur la surface de ces échangeurs par effet Joule au cours du freinage. Le rotor d'une telle machine doit être denté afin de générer une variation d'induction magnétique à la surface des échangeurs de chaleur en matériau massif ferromagnétique conducteur.

Un moteur à réluctance variable comporte un rotor ferromagnétique denté de manière régulière angulairement et un stator qui entoure la circonférence dudit rotor et porte des bobinages d'induction d'axes sensiblement radiaux et espacés angulairement de manière régulière. Le principe de fonctionnement du moteur consiste à alimenter séquentiellement ces bobinages radiaux afin d'aligner les dents du rotor le long d'un axe variable dans le temps, ce qui entraîne la rotation dudit rotor. Dans un dispositif réalisant à la fois les fonctions de frein à courants de Foucault et de moteur à réluctance variable, le bobinage de freinage, le stator avec les bobinages moteurs et les échangeurs de chaleur sont agencés en couronnes successives pour limiter l'encombrement du dispositif.

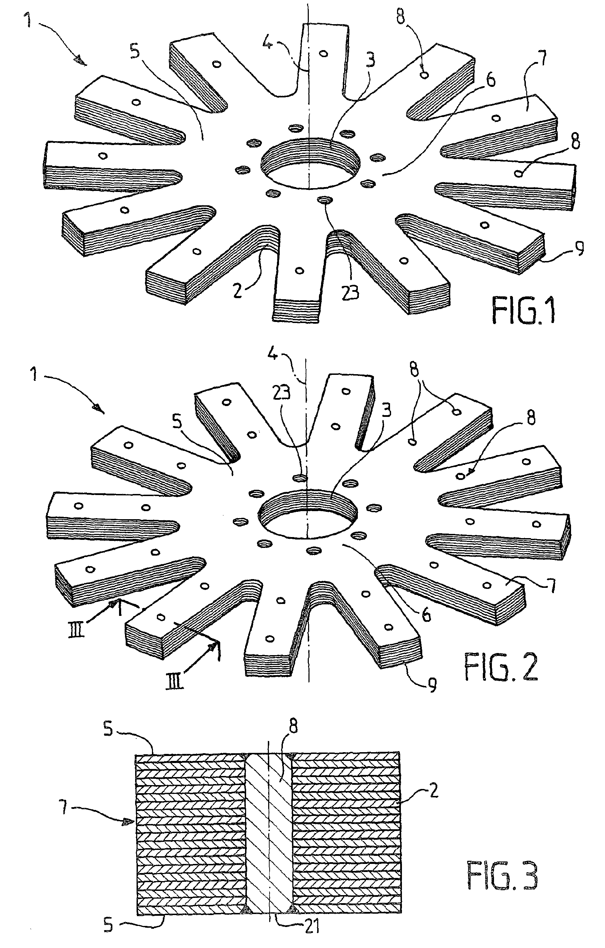

Comme visible sur les figures 1 et 2, le rotor selon l'invention comprend un corps 1 en un matériau ferromagnétique feuilleté, c'est-à-dire un empilement d'éléments de tôle 2 en matériau ferromagnétique parallèles entre eux, découpés selon la forme voulue. Les éléments de tôles 2 peuvent être recouverts d'une couche d'isolant électrique à leur surface par vernissage ou par oxydation. Le corps 1 est percé d'un trou d'axe 3 perpendiculairement au plan des éléments de tôle 2, ainsi que d'un ensemble de trous de fixation 23 centrées sur un cercle de centre l'axe 4. Le trou d'axe 3 débouchant et les trous de fixation 23 permettent le montage et la fixation du rotor sur un arbre rotatif 102 du dispositif, comme visible à la figure 8.

Le corps 1 est délimité dans la direction parallèle à l'axe géométrique 4 par deux faces planes opposées 5. Le corps 1 comprend une partie centrale 6 en forme sensiblement de cylindre de section circulaire et d'axe géométrique l'axe 4 et une pluralité de dents 7. Les dents 7 de forme sensiblement parallélépipédique rectangle s'étendent depuis la partie centrale 6 radialement par rapport à l'axe 4, leurs plus longs côtés étant parallèles à la direction radiale, et sont angulairement espacées de manière régulière. Les dents 7 sont destinées à participer à la fonction de moteur à réluctance variable du dispositif sur lequel est monté le rotor selon l'invention. La section d'extrémité 9 desdites dents 7 est un rectangle dont les deux côtés sont de longueurs voisines, ces longueurs correspondant approximativement au diamètre des inductances radiales 110 du moteur à réluctance variable, visibles à la figure 8.

Conformément à l'invention, le rotor comporte aussi des goupilles 8 en un matériau ferromagnétique qui assurent la fonction de ponts magnétiques. Elles sont destinées à participer à la fonction de freinage par courants de Foucault du dispositif sur lequel est monté le rotor selon l'invention. Avantageusement, elles sont réalisées en un matériau magnétique sans aimantation rémanente, afin de ne pas générer de couple résiduel lorsque le bobinage de freinage n'est plus alimenté. Les goupilles 8 sont par exemple de forme cylindrique à section circulaire, ou de toute autre forme géométrique représentant la partie massive du rotor. Elles sont logées dans des trous débouchant percés dans le corps 1 parallèlement à l'axe 4 et s'étendent de l'une à l'autre desdites deux faces planes opposées 5. Les goupilles 8 assurent la double fonction de ponts magnétiques et de renforts de la structure feuilleté du rotor.

Les goupilles 8 peuvent être réalisées en acier et sont, de préférence, recouvertes d'une couche électriquement isolante, par exemple par oxydation ou par vernissage, à la surface de leur partie centrale, de manière à être isolées électriquement des tôles du corps 1. Comme visible sur la figure 3, les goupilles 8 ont leurs deux extrémités 21 soudées au corps 1 au niveau des surfaces 5. Ainsi, les goupilles 8 assurent aussi le maintien des éléments de tôle 2 du matériau feuilleté en contact les uns contre les autres, à l'encontre des forces électromagnétiques qui tendent à écarter lesdits éléments de tôle 2 du rotor feuilleté au cours du fonctionnement du moteur à réluctance variable. L'isolation électrique entre les goupilles 8 et le corps 1 n'est bien sûr pas opérante aux points de soudure sur les surfaces 5.

Dans une première variante de l'invention, représentée à la figure 1, les goupilles 8 sont agencées à travers les dents 7, chaque dent 7 comportant une goupille dentale 8 centrée par exemple à mi-longueur de l'axe radial médian de ladite dent 7. Dans une deuxième variante de l'invention, représentée à la figure 2, chaque dent 7 comporte deux goupilles dentales 8 radialement espacées sur l'axe radial médian de ladite dent 7. Dans une autre variante de l'invention, toutes ou certaines des goupilles 8 peuvent avoir une section autre que circulaire, soit elliptique, soit polygonale. On peut également prévoir que ces goupilles 8 soient logées dans un rainure ménagée à la périphérie des dents 7.

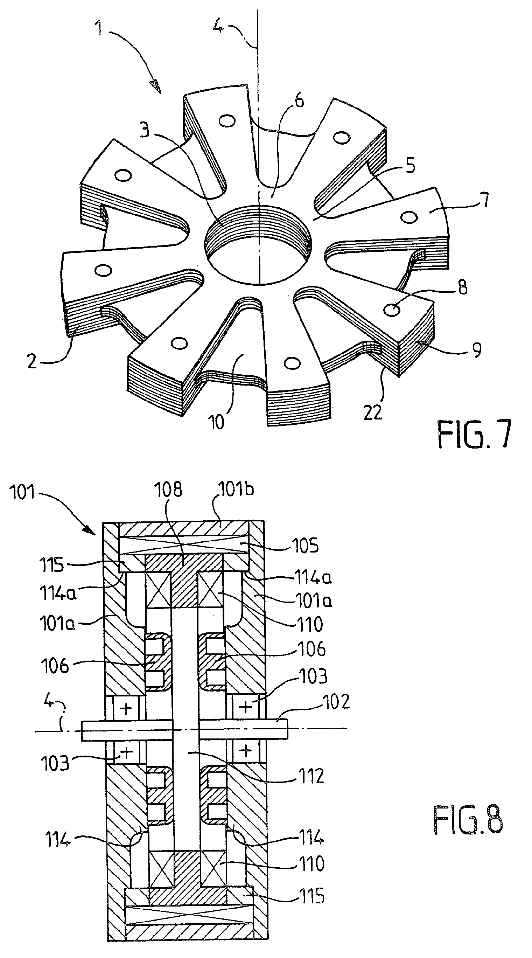

Dans un mode de réalisation particulier de l'invention, représenté à la figure 7, les dents 7 sont reliées entre elles par des voiles médians 10 en forme de secteurs angulaires de plus faible épaisseur que le corps 1. Les voiles médians 10 sont formés par une partie de l'empilement d'éléments de tôle 2 du corps 1, dans laquelle les éléments 2 sont découpés suivant un profil différents des éléments 2 formant les extrémités de l'empilement, de manière que les encoches séparant les dents 7 y sont moins profondes. Les voiles médians 10 augmentent les sections de passage du flux magnétique en fonctionnement moteur à réluctance variable. En outre, les voiles médians 10 améliorent la rigidité du rotor et de ce fait la tenue mécanique de celui-ci.

L'invention a aussi pour objet un dispositif ayant une fonction de frein à courants de Foucault et une fonction de moteur à réluctance variable, qui va maintenant être décrit en référence à la figure 8.

Le dispositif selon l'invention comporte un carter 101 dont les parois latérales 101a sont en forme de disque circulaire percé en son centre et dont la paroi longitudinale 101b est de forme cylindrique circulaire. L'arbre rotatif 102 est monté, par l'intermédiaire de roulements 103 à travers les parois latérales 101a du carter 101. L'arbre 102 est destiné à être accouplé à l'objet dont le mouvement doit être entraîné et/ou freiné par le dispositif selon l'invention. L'arbre 102 est solidaire en rotation d'un rotor feuilleté 112, tel que décrit dans l'une quelconque des variantes ci-dessus, qui s'étend à l'intérieur du carter 101. Le rotor 112 est représenté en plein sur la figure 8 afin de ne pas la surcharger. Un stator en matériau ferromagnétique 108 entoure le rotor 112 sur toute sa périphérie.

Au voisinage de leur périphérie, les parois 101a comportent sur leur face interne un renfoncement annulaire 114a destiné à recevoir successivement dans une direction radiale, une pièce annulaire de maintien 115, un bobinage d'induction 105 et la paroi longitudinale 101b du carter 101. Le bobinage circulaire d'induction 105 est porté par la périphérie interne de la paroi longitudinale cylindrique 101b du carter 101 sur toute sa longueur, pour engendrer un champ magnétique axial. La pièce de maintien 115 est constituée d'un manchon cylindrique creux destiné à maintenir latéralement le stator 108 au centre du carter 101. Le bobinage d'induction 105 s'étend de la paroi cylindrique 101b et entoure à la fois le stator 108 et les pièces de maintien 115.

Le stator 108 est intercalé radialement entre le rotor 112 et le bobinage 105. Il comporte sur sa périphérie interne des encoches sensiblement rectangulaires dans lesquelles sont logés des bobinages d'excitation 110 dont les axes s'étendent radialement par rapport à l'axe 4 du rotor 112. Les encoches ménagées sur la périphérie interne du stator 108 définissent un stator denté. D'une manière similaire au rotor 112, pour réduire les pertes par courants de Foucault dans celui-ci, le stator 108 comporte un empilement de tôles ferromagnétiques coaxiales et orthogonales à l'axe 4.

Les parois latérales 101a du carter 101 comportent une collerette annulaire 114 axialement saillante vers l'intérieur, pour définir une surface d'appui pour des échangeurs de chaleur 106, portés en saillie par les deux faces internes des parois latérales 101a du carter 101. Les échangeurs de chaleur 106 comportent des boîtes de circulation de liquide de refroidissement, par exemple de l'eau. Les échangeurs de chaleur 106 sont axialement espacés du rotor 112 par un faible jeu formant un entrefer de petite dimension. Les boîtes de refroidissement annulaires 106 s'étendent radialement au delà de l'arbre 102 et en vis-à-vis du rotor 112, notamment en face des différentes goupilles 8 du rotor 112. Le cas échéant, le diamètre extérieur des échangeurs de chaleur 106 est de préférence sensiblement égal au diamètre extérieur des voiles 10 du rotor 112. Le stator 108 entoure sensiblement les échangeurs de chaleur 106 et le rotor 112.

Les goupilles 8 améliorent l'efficacité du rotor feuilleté selon l'invention pour la fonction de freinage par courants de Foucault du dispositif par rapport à un rotor feuilleté classique. En effet, lors de son utilisation en freinage, le rotor est plongé dans le champ magnétique orienté parallèlement à l'axe 4 produit par le bobinage d'induction 105, de manière à induire des courants de Foucault. Les goupilles 8 étant ferromagnétiques et parallèles à l'axe de ce champ magnétique concentrent les lignes de champ. Elles augmentent l'induction qui est donc maximale en face d'une goupille 8 et minimale entre deux dents 7. Elles augmentent ainsi le flux qui traverse la dent 7, du fait qu'elles permettent l'établissement d'un champ d'induction magnétique continu sur toute l'épaisseur du rotor, par opposition au matériau feuilleté dont les interfaces entre éléments de tôle 2 génèrent des discontinuités du champ magnétique. Elles contribuent indirectement à augmenter les courants induits sur la surface des échangeurs 106 en vis à vis du rotor.

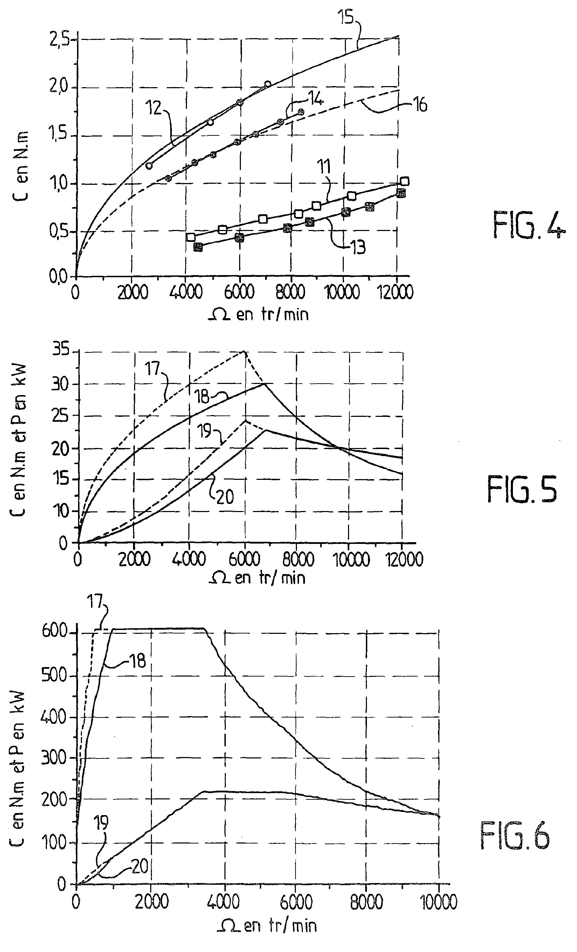

Les performances d'un dispositif comportant un rotor feuilleté selon l'invention vont maintenant être décrites, en références aux figures 4 à 6. Les figures 4 à 6 représentent des résultats d'essais comparatifs en freinage entre un rotor feuilleté à ponts magnétiques selon l'invention, et un rotor massif. Sur la figure 4, des mesures réalisées sur un banc d'essai du couple de freinage C fourni par un même dispositif de freinage à courants de Foucault sont tracées en fonction de la vitesse de rotation Ω du rotor pour différentes valeurs de l'intensité dans les bobinages d'induction. Les courbes 11 et 12 représentent les résultats obtenus avec le rotor massif en alliage d'acier 25CD4. Les courbes 13 et 14 représentent les résultats obtenus avec le rotor selon l'invention, réalisé en alliage de fer à 3% de silicium, feuilleté avec des feuilles de 0,5 mm d'épaisseur isolées. L'intensité d'alimentation est de 1 A pour les courbes 11 et 13 et de 2 A pour les courbes 12 et 14. La comparaison des courbes 11 et 13 d'une part, et des courbes 12 et 14 d'autre part, permet de conclure que l'utilisation du rotor en matériau feuilleté selon l'invention conduit à une perte d'efficacité de seulement 20 à 25% par rapport au rotor en alliage métallique massif. La courbe 15 de la figure 4 représente le résultat obtenu par un calcul de simulation pour le rotor massif. Le bon accord de ce résultat de calcul avec le résultat expérimental représenté par la courbe 12 montre la validité du modèle utilisé pour le calcul. La courbe 16 de la figure 4 représente le résultat obtenu par un calcul de simulation avec le même modèle pour un rotor massif en un matériau ferromagnétique de permittivité magnétique relative µr égale à 110. Le relativement bon accord entre les courbes 16 et 14 indique que le rotor feuilleté selon l'invention est équivalent, pour ce qui concerne le couple de freinage, à un rotor massif réalisé en un tel matériau.

La figure 5 représente des résultats de simulation numérique du couple de freinage C et de la puissance dissipée P d'un dispositif de freinage à courants de Foucault en fonction de la vitesse de rotation Ω pour les deux types de rotor, et avec la même intensité d'alimentation de 10 A. Les courbes 17 et 18 représentent le couple C obtenu avec le rotor massif en alliage d'acier 25CD4 et le rotor massif équivalent au rotor selon l'invention respectivement. Les courbes 19 et 20 représentent la puissance P obtenue avec le rotor massif en alliage d'acier 25CD4 et le rotor massif équivalent au rotor selon l'invention respectivement. Cette figure montre aussi que le couple maximal et la puissance maximale de freinage fournis par le dispositif ne sont réduits que de 25% lorsqu'un rotor feuilleté selon l'invention est utilisé au lieu d'un rotor massif. Cette perte d'efficacité peut être compensée en augmentant l'amplitude du champ magnétique de freinage.

Les valeurs représentées par les courbes 17 à 20 de la figure 5 sont obtenues avec une intensité de 10 A. Pour une vitesse de rotation Ω donnée, cette intensité d'alimentation doit être accrue à 15,5 A avec le rotor selon l'invention pour obtenir un couple de freinage égal à celui obtenu le rotor massif à 10 A. L'équivalence entre l'utilisation du rotor massif avec une intensité d'alimentation de 10 A et l'utilisation du rotor selon l'invention avec une intensité d'alimentation de 15,5 A est illustrée sur la figure 6, sur laquelle sont représentées les mêmes grandeurs qu'à la figure 5 avec les mêmes chiffres de référence, en extrapolation pour un dispositif de freinage de puissance P maximale égale à 220 kW.

Bien que l'invention ait été décrite en liaison avec plusieurs variantes de réalisation particulières, il est bien évident qu'elle n'y est nullement limitée et qu'elle comprend tous les équivalents techniques des moyens décrits ainsi que leurs combinaisons, si celles-ci entrent dans le cadre de l'invention.

## Revendications

1. Rotor feuilleté pour dispositif de freinage à courants de Foucault comportant un empilement (1) d'éléments plans (2) parallèles entre eux en matériau ferromagnétique, ledit empilement étant délimité dans la direction perpendiculaire auxdits éléments plans (2) par deux surfaces opposées (5), au moins un logement à travers l'épaisseur dudit empilement pour recevoir un organe ferromagnétique (8), en matériau ferromagnétique massif ou feuilleté dans une autre direction que ledit empilement (1), apte à établir un pont magnétique s'étendant entre lesdites deux surfaces opposées (5) et/ou à retenir lesdits éléments plans assemblés, **caractérisé par le fait qu'**il est aussi apte à servir de rotor d'un moteur à réluctance variable, ledit empilement (1) comprenant une pluralité de dents (7) découpées dans lesdits éléments plans (2) et s'étendant sensiblement radialement par rapport audit axe de rotation (4,102) depuis une partie centrale sensiblement cylindrique (6).

2. Rotor selon la revendication 1, **caractérisé par le fait que** chaque organe ferromagnétique (8) comporte deux extrémités liées respectivement à chacune desdites deux surfaces opposées (5), de manière à maintenir lesdits éléments plans (2) en contact les uns contre les autres.

3. Rotor selon la revendication 2, **caractérisé par le fait que** chaque organe ferromagnétique (8) est électriquement isolé dudit empilement (1), sauf éventuellement au voisinage desdites deux extrémités liées.

4. Rotor selon l'une des revendications 1 à 3, **caractérisé par le fait que** chaque organe ferromagnétique comporte une goupille (8), de forme quelconque, s'étendant à travers lesdits éléments plans (2) sensiblement perpendiculairement à ceux-ci.

5. Rotor selon la revendication 4, **caractérisé par le fait que** chaque goupille (8) est soudée à ses extrémités (21) auxdites deux surfaces opposées (5).

6. Rotor selon l'une des revendications 4 ou 5, **caractérisé par le fait que** ledit empilement (1) comprend une partie centrale (6) dans laquelle est percé un trou d'axe (3), sensiblement perpendiculairement auxdits éléments plans (2), pour permettre le montage dudit rotor sur un axe de rotation (4,102).

7. Rotor selon la revendication 1, **caractérisé par le fait que** la plupart des dents (7) comportent chacune au moins une desdites goupilles (8).

8. Rotor selon la revendication 7, **caractérisé par le fait que** chaque dent (7) comporte plusieurs desdites goupilles (8) radialement espacées les unes des autres.

9. Rotor selon la revendication 7 ou 8, **caractérisé par le fait que** chaque goupille (8) est agencée sur un axe radial médian de la dent associée.

10. Rotor selon l'une des revendications 1 à 9, **caractérisé par le fait qu'**au moins un premier sous-ensemble dudit empilement (1) comporte lesdites dents (7) découpées sur une première distance radiale prédéterminée à partir de la périphérie des éléments plans (2), et au moins un second sous-ensemble dudit empilement (1) comporte lesdites dents (7) découpées sur une seconde distance radiale prédéterminée supérieure à ladite première distance radiale, de façon que ledit premier sous-ensemble définisse une pluralité de voiles (10) entre les dents (7) du second sous-ensemble.

11. Rotor selon la revendication 10, **caractérisé par le fait que** ledit premier sous-ensemble est au milieu de l'empilement (1) et comporte de part et d'autre de son plan médian un sous-ensemble du type du second sous-ensemble précité.

12. Rotor selon l'une des revendications 1 à 11, **caractérisé par le fait que** chaque élément plan (2) est recouvert sur ses deux faces planes opposées d'une couche d'isolant électrique.

13. Dispositif de freinage à courants de Foucault **caractérisé par le fait qu'**il comprend un rotor feuilleté (112) selon l'une quelconque des revendications précédentes, solidaire d'un arbre (102) monté tournant à travers un carter (101) contenant au moins un bobinage d'induction (105) porté par une zone périphérique interne dudit carter (101), pour engendrer un champ magnétique à travers ledit rotor, ledit champ étant apte à engendrer des courants de Foucault afin de freiner la rotation de l'arbre (102).

14. Dispositif selon la revendication 13, **caractérisé par le fait qu'**il comporte, en outre, une pluralité de bobinages d'induction (110) d'axes sensiblement radiaux et espacés angulairement sur la périphérie interne du carter (101), lesdits bobinages radiaux (110) étant aptes à être alimentés séquentiellement afin d'entraîner en rotation les dents (7) du rotor sous l'action d'un champ magnétique sensiblement radial de direction angulaire variable, pour que le dispositif puisse servir aussi de moteur à réluctance variable.

15. Dispositif selon la revendication 13 ou 14, **caractérisé par le fait que** le carter (101) comporte des échangeurs de chaleur (106) axialement espacés des surfaces opposées (5) du rotor (112) d'un entrefer, de façon que lesdits organes ferromagnétiques (8) servant de ponts magnétiques soient positionnés en vis à vis desdits échangeurs de chaleur (106).
